# EUROPÄISCHE PATENTANMELDUNG

(11) **EP 1 186 854 A2**
(43) Veröffentlichungstag der Anmeldung: **13.03.2002**
(21) Anmeldenummer: 01120206.6
(22) Anmeldetag: 23.08.2001
(51) Int. Cl.: G01B 11/00

(54) **Beleuchtungs- und Abbildungseinrichtung für mehrere Spektralbereiche und Koordinatenmessmaschine mit einer Beleuchtungs- und Abbildungseinrichtung für mehrere Spektralbereiche**

(30) Priorität: 28.08.2000 DE 10042140
(71) Anmelder: Leica Microsystems Wetzlar GmbH, 35578 Wetzlar (DE)
(72) Erfinder: Müller-Rentz, Arnold, 65611 Brechen (DE)
(74) Vertreter: Reichert, Werner F., Dr.

(57) **Zusammenfassung**

Eine Beleuchtungs- und Abbildungseinrichtung (2) für mehrere Spektralbereiche umfasst ein Objektiv (21), das eine optische Achse (20) definiert. Ein Strahlteilermodul (32) ist in der optischen Achse (20) angeordnet. Mehrere Lichtquellen (35), von denen jeweils ein Beleuchtungsstrahlengang (35a, 35b, 35c) ausgeht, sind den Strahlteilermodul (32) zugeordnet. Ebenso sind mehrere Detektoren (34), denen jeweils ein Abbildungsstrahlengang (34a, 34b) zugeordnet ist, vorgesehen. Die Beleuchtungsstrahlengänge (35a, 35b, 35c) und die Abbildungsstrahlengänge(34a, 34b) weisen eine gemeinsame optische Wegstrecke auf, in der das Strahlteilermodul (32) angeordnet ist. Die Beleuchtungs- und Abbildungseinrichtung (2) kann vorteilhafter Weise in einer Koordinatenmessmaschine (1) eingesetzt werden.

## Beschreibung

Die Erfindung betrifft eine Beleuchtungs- und Abbildungseinrichtung für mehrere Spektralbereiche. Weiterhin betrifft die Erfindung eine Koordinatenmessmaschine mit einer Beleuchtungs- und Abbildungseinrichtung für mehrere Spektralbereiche.

Bei der Produktion von Halbleiter-Chips werden mit immer größerer Packungsdichte die Strukturbreiten der einzelnen Strukturen immer kleiner. Entsprechend den immer kleineren Strukturen, steigen die Anforderungen an die Spezifikationen von Koordinatenmessmaschinen, die als Mess- und Inspektionssysteme zur Messung der Kanten der Strukturen und der Position der Strukturen sowie zur Messung der Strukturbreiten eingesetzt werden. Bei diesen Koordinaten-Messgeräten werden immer noch optische Antastverfahren favorisiert, obwohl die Strukturbreiten schon kleiner als die zum Messen bzw. zur Inspektion verwendete Lichtwellenlänge sind. Der Grund liegt darin, dass Mess-Systeme mit optischen Antastverfahren wesentlich leichter zu benutzen sind als Systeme mit anderer Antastung, beispielsweise mit Elektronenstrahlen.

Aufgrund der immer kleineren zu messenden Strukturen steigen aber die Anforderungen nicht nur an die Eigenschaften der verwendeten Optik sondern auch an die Eigenschaften einer für die Auswertung und Analyse verwendeten Beleuchtungs- und Abbildungseinrichtung.

Eine Koordinatenmessmaschine ist in der deutschen Offenlegungsschrift DE-A-198 19 492 offenbart. Die Beleuchtung der Probe im Auflicht erfolgt durch eine Lichtquelle im nahen UV-Spektralbereich. Zur Detektion ist ebenfalls eine Detektoreinrichtung vorgesehen, deren Abbildungsstrahlengang über einen Strahlteiler in die durch ein Objektiv definierte optische Achse eingekoppelt wird. Dieses System erlaubt nicht die simultane Beleuchtung und Analyse der zu untersuchenden Probe mit mehreren Spektralbereichen bzw. die Auswertung nach getrennten Spektralbereichen.

Der Erfindung liegt die Aufgabe zugrunde eine Beleuchtungs- und Abbildungseinheit zu schaffen, die für mehrere Spektralbereiche geeignet ist.

Die objektive Aufgabe wird gelöst durch eine Beleuchtungs- und Abbildungseinheit mit
- einem Objektiv das eine optische Achse definiert,
- einem Strahlteilermodul das in der optischen Achse angeordnet ist,
- mehreren Lichtquellen von denen jeweils ein Beleuchtungsstrahlengang ausgeht,
- mehreren Detektoren denen jeweils ein Abbildungsstrahlengang zugeordnet ist, wobei die Beleuchtungsstrahlengänge und die Abbildungsstrahlengänge eine gemeinsame optische Wegstrecke aufweisen, in der das Strahlteilermodul angeordnet ist.

Eine weitere Aufgabe der Erfindung ist es eine Koordinatenmessmaschine zu schaffen, die geeignet ist sehr feine Strukturen auf einer Probe zu vermessen und dabei die zu untersuchende Probe mit mehreren Spektralbereichen zu bestrahlen.

Die objektive Aufgabe wird gelöst durch eine Koordinatenmessmaschine mit einer Beleuchtungs- und Abbildungseinrichtung für mehrere Spektralbereiche, die eine optische Achse definiert, und einem senkrecht und relativ zur optischen Achse interferometrisch messbaren, verschiebbarem Meßtisch zur Aufnahme einer Probe.

Ein Vorteil der Erfindung ist, dass die Beleuchtungs- und Abbildungseinrichtung mit einem Strahlteilermodul versehen ist, das in der optische Achse des verwendeten Objektivs zur Abbildung der zu untersuchenden Probe angeordnet ist. Dabei werden alle Abbildungs- und Beleuchtungsstrahlengänge entlang der optischen Achse geführt. Hinzu kommt, dass mehreren Lichtquellen vorgesehen sind, von denen jeweils ein Beleuchtungsstrahlengang ausgeht. Dabei können die Lichtquellen derart ausgestaltet sein, dass sie Licht in einem ganz bestimmten Wellenlängenbereich aussenden. Wie bereits erwähnt sind ebenfalls mehrere Detektoren vorgesehen, denen jeweils ein Abbildungsstrahlengang zugeordnet ist, wobei die Beleuchtungsstrahlengänge und die Abbildungsstrahlengänge eine gemeinsame optische Wegstrecke aufweisen, in der das Strahlteilermodul angeordnet ist. Dadurch können die verschiedenen Detektoren jeweils selektiv mit verschiedenen Wellenlängenbereichen beaufschlagt werden.

Ebenso ist es besonders vorteilhaft, die Beleuchtungs- und Abbildungseinrichtung in einer Koordinatenmessmaschine einzusetzen. Die Koordinatenmessmaschine muss so ausgelegt sein, dass alle möglichen störenden Einflüsse größtenteils ausgeschlossen sind, die eine hochgenaue Messung stören. Nur dann ist die Messung der Position von Kanten an Strukturen mit einer Genauigkeit von wenigen Nanometern möglich. Durch die erfindungsgemäße Beleuchtungs- und Abbildungseinrichtung muss trotz mehrerer Lichtquellen und Detektoren nicht umgeschaltet oder eine mechanische Verschiebung der optischen Wegstrecke eingeleitet werden. Diese Vorgänge würden Turbulenzen bzw. Wärme erzeugen, welche die Messung in nicht definierter Weise beeinflussen. Die Verwendung des Strahlteilermoduls in der Beleuchtungs- und Abbildungseinrichtung ermöglicht es, dass alle Beleuchtungs- und Abbildungsstrahlengänge durch lediglich ein Objektiv geführt werden. Die Beleuchtungs- und Abbildungseinrichtung ist für mehrere Spektralbereiche geeignet.

Eine Ausführungsform der Beleuchtungs- und Abbildungseinrichtung erweist sich für die sehr genaue Messung mit der Koordinatenmessmaschine als besonders vorteilhaft. Hier ist dem Objektiv jeweils ein Strahlteilermodul mit vier Strahlteilern nachgeordnet, die jeweils paarweise in einer StrahlteilerGruppe angeordnet sind. Dabei ist in jeder Gruppe der erste Strahlteiler ein fünfzig/fünfzig Teiler und der zweite Strahlteiler ein dichroitischer Teiler. Die Eigenschaften der Strahlteiler hinsichtlich der Wellenlängen sind derart, dass die erste Strahlteilergruppe nur Licht mit einer Wellenlänge oberhalb einer ersten Wellenlänge λ₁ durchlässt, dass die zweite Strahlteilergruppe nur Licht mit einer Wellenlänge unterhalb einer zweiten Wellenlänge λ₂ durchlässt. Ferner ist hinter der zweiten Gruppe ein Detektor nach dem Strahlteilermodul im transmittierten Strahlengang angeordnet, wobei der Detektor im Wellenlängenbereich zwischen λ₁ und λ₂ detektiert. Auf diese stehen die genannten drei verschiedenen Spektralbereiche zur Verfügung. Um eine entsprechende Abbildung von hoher Qualität zu erreichen, ist das Objektiv beugungsbegrenzt im Bereich zwischen einer unteren Wellenlänge λₘᵢₙ kleiner als λ₁ und einer oberen Wellenlänge λₘₐₓ größer als λ₂ korrigiert. Die Wellenlängen sind in dem bevorzugten Ausführungsbeispiel für λₘᵢₙ = 365 nm und λₘₐₓ= 900 nm.

In der Zeichnung ist der Erfindungsgegenstand schematisch dargestellt und wird anhand der Figuren nachfolgend beschrieben. Dabei zeigen:
- Fig. 1: eine schematische Darstellung einer Koordinatenmessmaschine mit der erfindungsgemäßen Beleuchtungs- und Abbildungseinrichtung;
- Fig. 2: ein schematische Darstellung der Beleuchtungs- und Abbildungseinrichtung;
- Fig. 3: eine konstruktive Ausgestaltung des Mehrfach-Strahlteilermoduls, das Teil der erfinderischen Beleuchtungs- und Abbildungseinrichtung ist;
- Fig. 4: ein Diagramm der optischen Eigenschaften des ersten Strahlteilers der ersten Gruppe des Strahlteilermoduls;
- Fig. 5: ein Diagramm der optischen Eigenschaften des zweiten Strahlteilers der ersten Gruppe des Strahlteilermoduls;
- Fig. 6: ein Diagramm die optischen Eigenschaften des ersten Strahlteilers der zweiten Gruppe des Strahlteilermoduls; und
- Fig. 7: ein Diagramm der optischen Eigenschaften des zweiten Strahlteilers der zweiten Gruppe des Strahlteilermoduls.

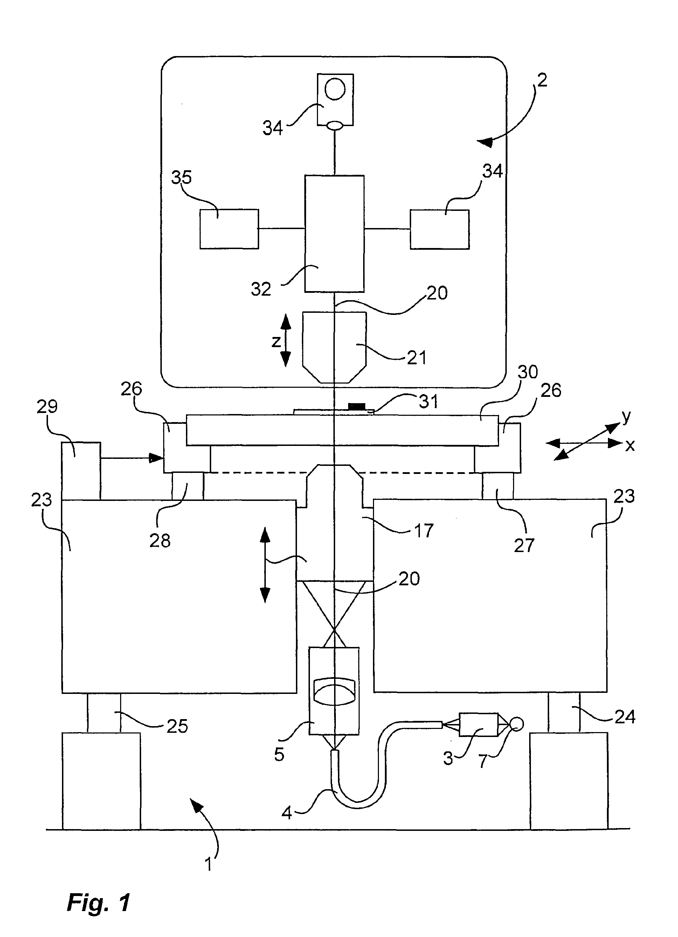

Fig. 1 zeigt ein Ausführungsbeispiel für eine Koordinatenmessmaschine 1 mit einer kombinierten Auflicht- und Durchlicht-Beleuchtung, welche eine erfindungsgemäße Beleuchtungs- und Abbildungseinrichtung 2 umfasst.

Die dargestellte Koordinatenmessmaschine weist einen Granitblock 23 auf, der auf Schwingungsdämpfern 24, 25 gelagert ist. Auf dem Granitblock 23 ist ein als Rahmen ausgebildeter Messtisch 26 auf Luftlagern 27, 28 in x- und y-Richtung (in der Zeichnung durch zwei Pfeile angedeutet) gleitend verschiebbar. Der Rahmen des Messtisches 26 besteht vorteilhafter Weise aus einer Glaskeramik mit geringem thermischen Ausdehnungskoeffizienten. Die Antriebselemente zum Verfahren des Messtisches 26 sind nicht dargestellt. Die Position des Messtisches 26 wird mit einem Laser-Interferometer-System 29 in x- und y-Richtung gemessen.

In den Messtisch 26 ist eine Probe 30 eingelegt. Die Probe 30 besteht z.B. aus Quarzglas. Auf der Probenoberfläche sind Strukturen 31 aufgebracht. Da der Messtisch 26 als Rahmen ausgebildet ist, kann die Probe 30 auch von unten her durchleuchtet werden.

Oberhalb der Probe 30 befindet sich die Beleuchtungs- und Abbildungseinrichtung 2, die eine hohe optische Güte besitzt. Die Beleuchtungs- und Abbildungseinrichtung 2 ist um eine optische Achse 20 herum angeordnet. Eine Fokussierung ist längs der optischen Achse 20 in z-Richtung möglich. Die Beleuchtungs- und Abbildungseinrichtung 2 besteht aus einem Strahlteilermodul 32 und mehreren Detektoren 34 und ebenfalls mehreren Beleuchtungseinrichtungen 35. Mittels der Detektoren 34 wird die Position einer Struktur 31 als Koordinaten auf der Probe 30 bestimmt.

In den Granitblock 23 ist ferner eine Durchlicht-Beleuchtungseinrichtung mit einem höhenverstellbaren Kondensor 17 und einer Lichtquelle 7 eingesetzt. Von der Lichtquelle 1 geht ein Durchlicht-Beleuchtungsstrahlengang mit einer optischen Achse 2 aus. Das Licht der Lichtquelle 1 wird über eine vergrößernde Einkoppeloptik 3 mit möglichst großer Numerischer Eintrittsapertur (z.B. von NA = 0.60) abgenommen. Auf diese Weise wird besonders viel Licht der Lichtquelle 1 aufgenommen. Das aufgenommene Licht wird mit der Einkoppeloptik 3 in einen Lichtwellenleiter eingekoppelt. Als Lichtwellenleiter wird ein optisches Faserbündel 4 verwendet.

Eine Auskoppeloptik 5, die vorzugsweise als ein Achromat ausgebildet ist, kollimiert das von dem Faserbündel 4 emittierte Licht.

Die optische Achse des Kondensors 17 fluchtet mit der optischen Achse 20. Die Höhenverstellung des Kondensors 17 dient der Anpassung der auf die Struktur 31 zu richtenden Beleuchtungsstrahlen an unterschiedliche optische Dicken von Masken 30. Der Kondensorkopf kann insbesondere in den offenen Teil des Messtischrahmens hineinreichen. Zum Schutz vor Beschädigungen bei Verschiebungen des Messtisches 26 über die gesamte Maskenfläche kann der Kondensor 26 aber auch unter die Oberfläche des Granitblocks 23 gezogen werden. Die Lichtquelle 7 und die mehreren
Beleuchtungseinrichtungen 35 der Beleuchtungs- und Abbildungseinrichtung 2 sind voneinander unabhängig einschaltbar.

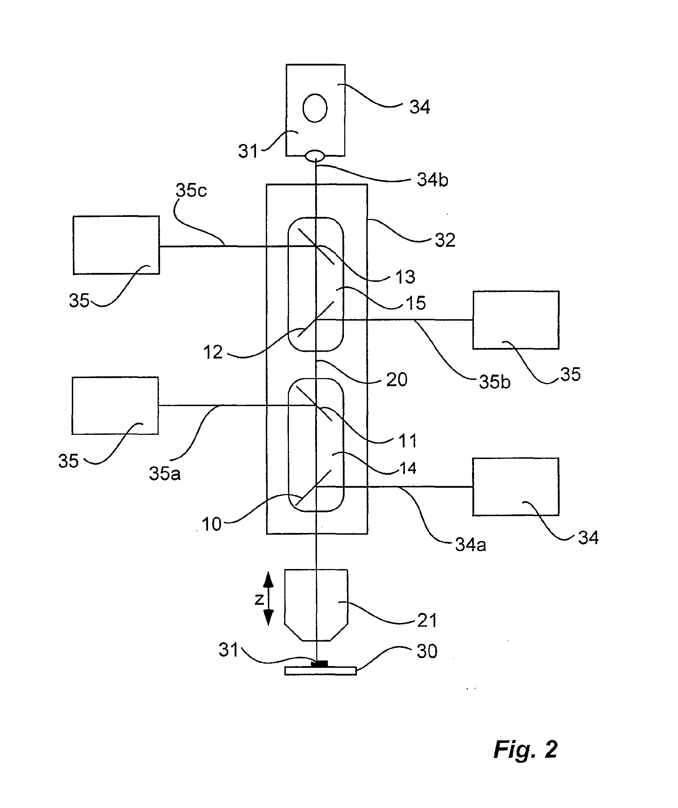

Fig. 2 zeigt eine besondere Ausführungsform der Beleuchtungs- und Abbildungseinrichtung 2, die für mehrere spektrale Bereiche geeignet ist und für mehrere spektrale Bereiche eine Abbildung hoher optischer Güte ermöglicht. Die Beleuchtungs- und Abbildungseinrichtung 2 umfasst ein Objektiv 21, das in der optischen Achse 20 angeordnet ist bzw. die optische Achse 20 definiert. Dem Objektiv 20 ist ein Strahlteilermodul 32 nachgeschaltet, das im wesentliche zentrisch um die optische Achse 20 angeordnet ist. Ferner umfasst die Beleuchtungs- und Abbildungseinrichtung 2, mehrere Detektoren 34 und mehrere Lichtquellen 35. Das Strahlteilermodul 32 besteht aus mehreren Strahlteilern 10, 11, 12 und 13, die um und entlang der optischen Achse 20 angeordnet sind. In einer besonderen Ausführungsform sind, ausgehend vom Objektiv 21, jeweils der erste und der zweite Strahlteiler 10 und 11 in einer ersten Gruppe 14 und der dritte und vierte Strahlteiler 12 und 13 in einer zweiten Gruppe 15 angeordnet. Dabei ist der erster Strahlteiler 10 und 12 jeder Gruppe 14 und 15 als fünfzig/fünfzig-Teiler ausgebildet. Der zweite Strahlteiler 11 und 13 jeder Gruppe 14 und 15 ist als dichroitischer Teiler ausgebildet. Der erste Strahlteiler 10 der ersten Gruppe 14 ist einem Detektor 34 zugeordnet, der in einem zugehörigen Abbildungsstrahlengang 34a angeordnet ist. Dieser Strahlteiler 10 dient zum Auszukoppeln des Lichts aus der gemeinsamen optischen Wegstrecke im Strahlteilermodul 32. Die gemeinsame optische Wegstrecke im Strahlteilermodul 32 ist mit der optischen Achse 20 identisch. Der zweite Strahlteiler 11 der ersten Gruppe 14 ist einer Lichtquelle 35 zugeordnet, die in einem zugehörigen Beleuchtungsstrahlengang 35a angeordnet ist. Der erste Strahlteiler 12 der zweiten Gruppe 15 ist ebenfalls einer Lichtquelle 35 zugeordnet, die in einem zugehörigen Beleuchtungsstrahlengang 35b angeordnet ist. Der zweite Strahlteiler 13 der zweiten Gruppe 15 ist einem Detektor 34 und einer weiteren Lichtquelle 35 zugeordnet. Der Detektor 34 definiert einen Abbildungsstrahlengang 34b und die weitere Lichtquelle 35 definiert einen Beleuchtungsstrahlengang 35c.

In einer speziellen Ausführungsform für die Vermessung von Strukturen 31 auf einer Probe 30, sind als Lichtquellen 34 bzw. als Detektoren 35 die nachfolgend beschriebenen Bauteile in einer bestimmten Reihenfolge in Bezug auf das Objektiv 21 angebracht. Dem ersten Strahlteiler 10 der ersten Gruppe ist eine Messkamera zugeordnet. Die Messkamera ist eine spezielle Ausgestaltung des Detektors 34. Die Messkamera erhält das von der Probe 30 ausgehende Licht nach nur einer Strahlteilung. Dies ist erforderlich, um mögliche Abbildungsfehler durch mehrfache Strahlteilung so gering wie möglich zu halten, da mittels der Messkamera die Vermessung der Strukturen 31 auf der Probe 30 vorgenommen wird. Jegliche Verfälschung der Messung durch Abbildungsfehler ist dadurch ausgeschlossen. Dem zweiten Strahlteiler 11 der ersten Gruppe 14 ist als Lichtquelle 35 eine Messbeleuchtung zugeordnet, die Licht in einem Wellenlängenbereich von 365 bis 405 nm aussendet. Dem ersten Strahlteiler 12 der zweiten Gruppe 15 ist als Lichtquelle 35 eine Übersichtsbeleuchtung zugeordnet, die Licht in einem Wellenlängenbereich von 480 bis 700 nm aussendet. Dem zweiten Strahlteiler 13 der zweiten Gruppe 15 als Detektor 34 eine Alignmenteinrichtung zugeordnet, die für die Ausrichtung der Probe hinsichtlich Beleuchtungs- und Abbildungseinrichtung 2 verantwortlich ist. Ferner ist diesem Strahlteiler 13 eine weitere Lichtquelle 34 zugeordnet, die als Laserautofokus ausgebildet ist. Der Laserautofokus arbeitet mit Wellenlängen oberhalb von 800 nm.

Die Strahlteiler sind in Abhängigkeit von der zur Vermessung der Probe 30 verwendeten Wellenlänge entsprechend angeordnet. Ausgehend vom Objektiv 21 ist die erste Gruppe 14 der Strahlteiler 10 und 11 derart ausgestaltet, dass nur Licht mit einer Wellenlänge oberhalb von einer ersten Wellenlänge λ₁ durchgelassen wird. Die zweite Gruppe 15, bestehend aus den Strahlteilern 12 und 13, ist derart ausgestaltet, dass nur Licht mit einer Wellenlänge unterhalb von einer zweiten Wellenlänge λ₂ durchgelassen wird. Wie bereits oben erwähnt, befindet sich hinter der zweiten Gruppe 15 ein Detektor 34 im Abbildungsstrahlengang 34b des Strahlteilermoduls 32, wobei der Detektor 34 im Wellenlängenbereich zwischen λ₁ und λ₂ detektiert. Das Objektiv ist zwischen einer unteren Wellenlänge λₘᵢₙ kleiner als λ₁ und einer oberen Wellenlänge λₘₐₓ größer als λ₂ beugungsbegrenzt korrigiert.

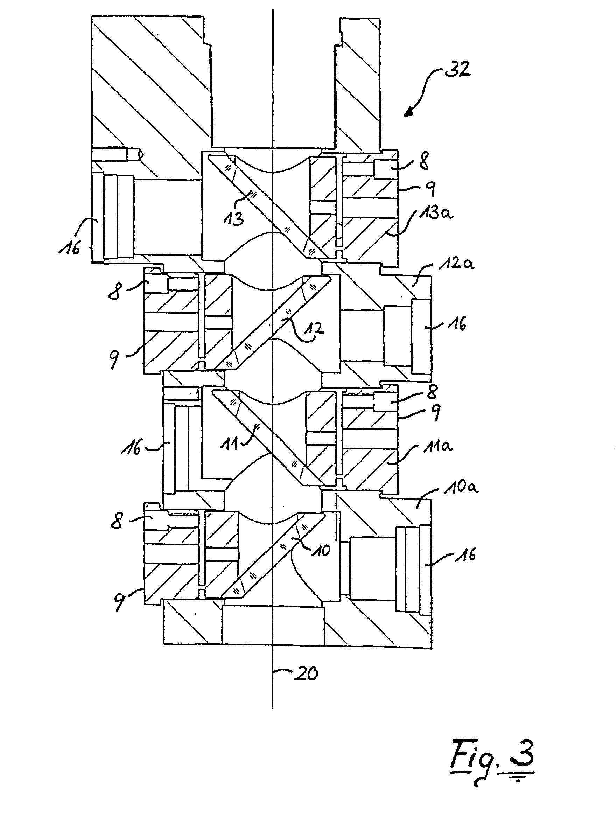

In Fig. 3 ist eine Ausführungsform einer konstruktiven Ausgestaltung eines Strahlteilermoduls 32 dargestellt. Das Strahlteilermodul 32 definiert einen unteren Teil, an den sich das Objektiv 21 (siehe Fig. 2) anschließt. Ferner definiert das Strahlteilermodul 32 einen oberen Teil, in dem eine Bohrung ausgebildet ist, die zur Aufnahme einer Optik (nicht dargestellt) ausgebildet ist. Der Optik ist ein Detektor 34 zugeordnet, der in dieser Ausführungsform eine Alignmenteinrichtung ist. Jeder der Strahlteiler 10, 11, 12 und 13 ist in eine Halterung fest eingesetzt. Dabei ist der Strahlteiler mit dem Bezugszeichen 10 in einer ersten Halterung 10a, der Strahlteiler mit dem Bezugszeichen 11 in einer zweiten Halterung 11a, der Strahlteiler mit dem Bezugszeichen 12 in einer dritten Halterung 12a und der Strahlteiler mit dem Bezugszeichen 13 in einer vierten Halterung 13a eingesetzt. Jede der Halterungen 10a, 11a, 12a und 13a weist einen Flansch 16 auf, an dem optische Elemente angebracht werden können, die das Licht zu bzw. von den Halterungen 10a, 11a, 12a und 13a zu Detektoren 34 oder Lichtquellen 35 führen. Gegenüber dem Flansch 16 ist in jeder Halterung 10a, 11a, 12a und 13a ein Verstellelement 9 vorgesehen, in dem eine Bohrung 8 für eine Verstellschraube (nicht dargestellt) angebracht ist, welche die Einstellung des Strahlteilers bezüglich der optischen Achse 20 ermöglicht. Es ist darauf zu achten, dass die Strahlteiler mit den Bezugszeichen 10 und 12 jeweils um 45° gegenüber der optischen Achse geneigt sind. Ferner sind die Strahlteiler mit den Bezugszeichen 11 und 13 jeweils um - 45° gegenüber der optischen Achse geneigt. Eine entsprechende spiegelverkehrte Anordnung ist möglich und für jeden Fachmann selbstverständlich.

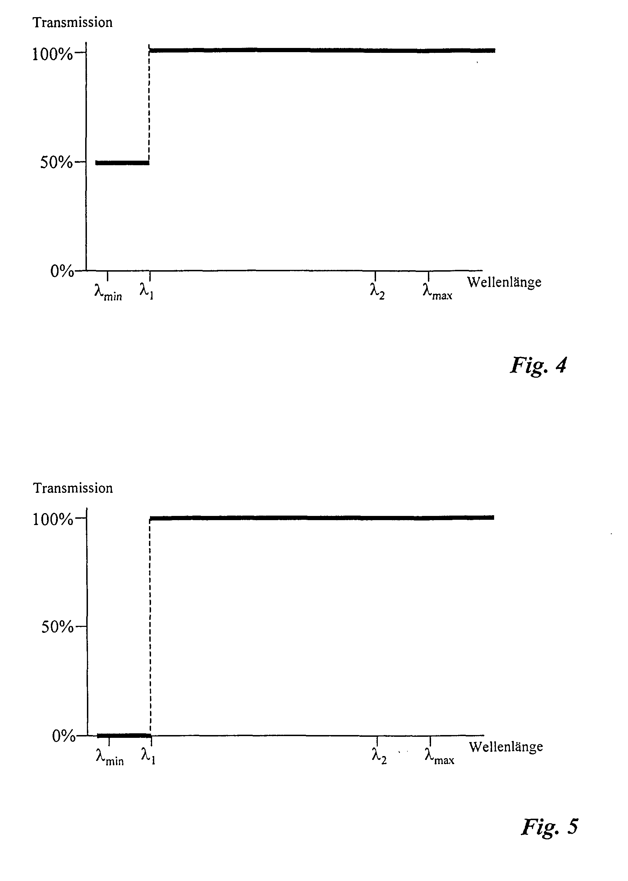

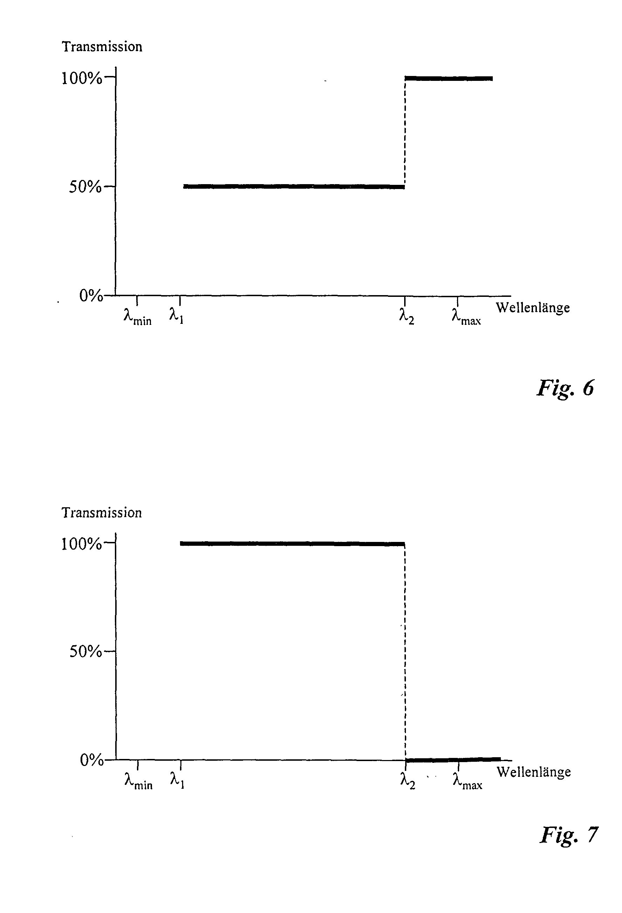

Die optischen Eigenschaften der Strahlteiler 10, 11, 12 und 13 sind in Fig. 4 bis 7 dargestellt. Die Reihenfolge der Anordnung der Strahlteiler, ausgehend vom Objektiv 21, im Strahlteilermodul 32 bzw. deren optische Eigenschaften sind lediglich ein Ausführungsbeispiel und nicht als Beschränkung der Erfindung aufzufassen. Der unmittelbar dem Objektiv 21 folgende Strahlteiler 10 ist als fünfzig/fünfzig-Strahlteiler ausgebildet. Dieser Strahlteiler reflektiert 50% des Lichts in Richtung des Flansches 16 und die anderen 50% werden entlang der optischen Achse 20 durchgelassen. Die Eigenschaften des Strahlteilers 10 hinsichtlich der Wellenlängen ist in Fig. 4 dargestellt. Im Bereich von λₘᵢₙ = 350 nm bis zu ca. λ₁ = 420 nm fungiert dieser Strahlteiler 10 als fünfzig/fünfzig-Strahlteiler. Für Wellenlängen, die größer sind als λ₁ = 420 nm wird das gesamte Licht entlang der optischen Achse 20 durchgelassen. Entlang der optischen Achse trifft das vom Strahlteiler 10 durchgelassene Licht auf den Strahlteiler 11. Dieser Strahlteiler 11 ist ein Kantenteiler. Wie in Fig. 5 dargestellt, wird das gesamte Licht im Bereich von λₘᵢₙ = 350 nm bis zu ca. λ₁ = 420 nm in Richtung des Flansches 16 der Halterung 11a reflektiert. Nur Licht mit einer Wellenlänge größer als λ₁ = 420 nm wird Licht entlang der optischen Achse 20 durchgelassen. Als nächstes trifft das vom Strahlteiler 11 kommende Licht auf den Strahlteiler 12, der in der Halterung 12a eingebaut ist. Dieser Strahlteiler 12 ist ebenfalls als fünfzig/fünfzig-Strahlteiler ausgebildet. Fig. 6 zeigt die Eigenschaften des Strahlteilers 12 hinsichtlich der Wellenlängen. Im Wellenlängenbereich von λ₁ = 420 nm bis zu ca. λ₂ = 750 nm wir 50% der einfallenden Lichtintensität in Richtung des Flansches 16 der Halterung 12a reflektiert. Oberhalb der Wellenlänge λₘₐₓ = 900 nm ist der Strahlteiler 12 vollkommen durchlässig.

Sodann gelangt das Licht auf den Strahlteiler 13, der in der Halterung 13a vorgesehen ist. Wie aus Fig. 7 zu erkennen ist, ist der Strahlteiler 13 für den Wellenlängenbereich λ₁ = 420 nm bis zu ca. λ₂ = 750 nm transparent. Licht oberhalb der Wellenlänge λ₂ = 750 nm wird nicht durchgelassen bzw. in Richtung des Flansches 16 der Halterung 13a reflektiert. Die Zahlenangaben für die Wellenlängen sind lediglich als eine mögliche Ausführungsform anzusehen. Die Auswahl anderer Wellenlängenbereiche liegt im erfinderischen Können eines Fachmanns.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Koordinatenmessmaschine
- 2: Beleuchtungs- und Abbildungseinrichtung
- 3: Einkoppeloptik
- 4: Faserbündel
- 5: Auskoppeloptik
- 7: Lichtquelle
- 8: Bohrung
- 9: Verstellelement
- 10: Strahlteiler
- 10a: erste Halterung
- 11: Strahlteiler
- 11a: zweite Halterung
- 12: Strahlteiler
- 12a: dritte Halterung
- 13: Strahlteiler
- 13a: vierte Halterung
- 14: erste Gruppe
- 15: zweite Gruppe
- 16: Flansch
- 17: höhenverstellbarer Kondensor
- 20: optische Achse
- 21: Objektiv
- 24: Schwingungsdämpfer
- 25: Schwingungsdämpfer
- 26: Messtisch
- 27: Luftlager
- 28: Luftlager
- 29: Laser-Interferometer-System
- 30: Probe
- 31: Strukturen
- 32: Strahlteilermodul
- 33: Alignmenteinrichtung
- 34: Detektoren
- 34a: Abbildungsstrahlengang
- 34b: Abbildungsstrahlengang
- 35: Lichtquellen
- 35a: Beleuchtungsstrahlengang
- 35b: Beleuchtungsstrahlengang
- 35c: Beleuchtungsstrahlengang

## Patentansprüche

1. Beleuchtungs- und Abbildungseinrichtung (2) für mehrere Spektralbereiche mit
- einem Objektiv (21), das eine optische Achse (20) definiert,
- einem Strahlteilermodul (32), das in der optischen Asche (20) angeordnet ist,
- mehreren Lichtquellen (35), von denen jeweils ein Beleuchtungsstrahlengang (35a, 35b, 35c) ausgeht,
- mehreren Detektoren (34), denen jeweils ein Abbildungsstrahlengang (34a, 34b) zugeordnet ist, wobei die Beleuchtungsstrahlengänge (35a, 35b, 35c) und die Abbildungsstrahlengänge(34a, 34b) eine gemeinsame optische Wegstrecke aufweisen, in der das Strahlteilermodul (32) angeordnet ist.

2. Beleuchtungs- und Abbildungseinrichtung (2) nach Anspruch 1, **dadurch gekennzeichnet, dass** in dem Strahlteilermodul (32) mehrere Strahlteiler (10, 11, 12, 13) angeordnet sind, die entweder je einer der Lichtquellen (35) zugeordnet und in deren Beleuchtungsstrahlengang (35a, 35b, 35c) angeordnet sind, um diese in die gemeinsame optische Wegstrecke einzukoppeln, oder die je einem der Detektoren (34) zugeordnet und in dem zugehörigen Abbildungsstrahlengang (34a, 34b) angeordnet sind, um diesen aus der gemeinsamen optischen Wegstrecke auszukoppeln.

3. Beleuchtungs- und Abbildungseinrichtung (2) nach Anspruch 2, **dadurch gekennzeichnet, dass** ausgehend vom Objektiv (21) jeweils zwei Strahlteiler (10; 11 und 12; 13) paarweise in einer Gruppe (14, 15) angeordnet sind, wobei der erste Strahlteiler (10) jeder Gruppe ein fünfzig/fünfzig-Teiler ist und der zweite Strahlteiler (11) jeder Gruppe ein dichroitischer Teiler ist.

4. Beleuchtungs- und Abbildungseinrichtung (2) nach Anspruch 3, **dadurch gekennzeichnet, dass** ausgehend vom Objektiv (21) die erste Strahlteilergruppe (14) nur Licht mit einer Wellenlänge oberhalb einer ersten Wellenlänge λ₁ durchlässt, dass die zweite Strahlteilergruppe (15) nur Licht mit einer Wellenlänge unterhalb einer zweiten Wellenlänge λ₂ durchlässt und dass hinter der zweiten Gruppe (15) ein Detektor (34) nach dem Strahlteilermodul (13) im transmittierten Strahlengang angeordnet ist, wobei der Detektor (34) im Wellenlängenbereich zwischen λ₁ und λ₂ detektiert.

5. Beleuchtungs- und Abbildungseinrichtung (2) nach Anspruch 4, **dadurch gekennzeichnet, dass** das Objektiv (21) beugungsbegrenzt im Bereich zwischen einer unteren Wellenlänge λₘᵢₙ kleiner als λ₁ und einer oberen Wellenlänge λₘₐₓ größer als λ₂ korrigiert ist.

6. Koordinatenmessmaschine (1) mit einer Beleuchtungs- und Abbildungseinrichtung (2) nach Anspruch 1 für mehrere Spektralbereiche, die eine optische Achse (20) definiert und einem senkrecht und relativ zur optischen Achse (20) interferometrisch messbaren, verschiebbarem Messtisch (26) zur Aufnahme einer Probe (30).

7. Koordinatenmessmaschine (1) nach Anspruch 6 , **dadurch gekennzeichnet, dass** die Beleuchtungs- und Abbildungseinrichtung (2) für mehrere Spektralbereiche
- ein Objektiv (21), das eine optische Achse (20) definiert,
- ein Strahlteilermodul (32), das in der optischen Asche (20) angeordnet ist,
- mehrere Lichtquellen (35), von denen jeweils ein Beleuchtungsstrahlengang (35a, 35b, 35c) ausgeht, und
- mehrere Detektoren (34), denen jeweils ein Abbildungsstrahlengang (34a, 34b) zugeordnet ist, wobei die Beleuchtungsstrahlengänge (35a, 35b, 35c) und die Abbildungsstrahlengänge (34a, 34b) eine gemeinsame optische Wegstrecke aufweisen, in der das Strahlteilermodul (32) angeordnet ist,
umfasst.

8. Koordinatenmessmaschine (1) nach Anspruch 7 , **dadurch gekennzeichnet, dass** in dem Strahlteilermodul (32) mehrere Strahlteiler (10, 11, 12, 13) angeordnet sind, die entweder je einer der Lichtquellen (35) zugeordnet und in deren Beleuchtungsstrahlengang (35a, 35b, 35c) angeordnet sind, um diese in die gemeinsame optische Wegstrecke einzukoppeln, oder die je einem der Detektoren (34) zugeordnet und in dem zugehörigen Abbildungsstrahlengang (34a, 34b) angeordnet sind, um diesen aus der gemeinsamen optischen Wegstrecke auszukoppeln.

9. Koordinatenmessmaschine nach Anspruch 8 , **dadurch gekennzeichnet,**
- **dass** ausgehend vom Objektiv (21) jeweils zwei Strahlteiler (10; 11 und 12; 13) paarweise in einer Gruppe (14, 15) angeordnet sind, wobei der erste Strahlteiler (10) jeder Gruppe ein fünfzig/fünfzig-Teiler ist und der zweite Strahlteiler (11) jeder Gruppe ein dichroitischer Teiler ist
- und **dass** ausgehend vom Objektiv (21) die erste Strahlteilergruppe (14) nur Licht mit einer Wellenlänge oberhalb von λ₁ durchlässt, dass die zweite Strahlteilergruppe (15) nur Licht mit einer Wellenlänge unterhalb von λ₂ durchlässt und dass hinter der zweiten Gruppe (15) ein Detektor (34) nach dem Strahlteilermodul (32) im transmittierten Strahlengang angeordnet ist, wobei der Detektor (34) im Wellenlängenbereich zwischen λ₁ und λ₂ detektiert.

10. Koordinatenmessmaschine (1) nach Anspruch 6 , **dadurch gekennzeichnet,**
- **dass** die Beleuchtungs- und Abbildungseinrichtung (2) eine Messeinrichtung, eine Alignmenteinrichtung und eine Autofocuseinrichtung umfasst.
- und **dass** der Messeinrichtung der Wellenlängenbereich unterhalb λ₁ zugeordnet ist, der Alignmenteinrichtung der Wellenlängenbereich zwischen λ₁ und λ₂ zugeordnet ist und der Autofocuseinrichtung der Wellenlängenbereich oberhalb λ₂ zugeordnet ist.
